# FASCICULE DE BREVET EUROPEEN

(11) **EP 0 857 981 B1**
(45) Date de publication et mention de la délivrance du brevet: **11.12.2002**
(21) Numéro de dépôt: 97101812.2
(22) Date de dépôt: 05.02.1997
(51) Int. Cl.: G01S 13/00, G01S 13/02, H03L 7/06

(54) **Station de base d'un système d'interrogation à distance comprenant un oscillateur commandé en tension et asservi en phase**
Basisstation eines Fernabfragesystems mit spannungsgesteuertem und phasengeregeltem Oszillator
Base station of a remote interrogation system with a voltage and phase controlled oscillator

(43) Date de publication de la demande: 12.08.1998
(73) Titulaire: EM Microelectronic-Marin SA, 2074 Marin (CH)
(72) Inventeur: Nandra, Navraj, 2525 Le Landeron (CH); Roz, Thierry, 2000 Neuchâtel (CH)
(74) Mandataire: Balsters, Robert

(56) Documents cités:
- EP-A- 0 625 832
- EP-A- 0 722 155
- EP-A- 0 730 071
- WO-A-91/16696
- DE-C- 4 430 360
- DE-C- 19 546 171
- US-A- 4 169 260
- US-A- 4 388 524
- PATENT ABSTRACTS OF JAPAN vol. 096, no. 011, 29 Novembre 1996 & JP 08 172378 A (MATSUSHITA ELECTRIC WORKS LTD)

## Description

La présente invention concerne une station de base d'un système d'interrogation à distance, utilisant un oscillateur commandé en tension asservi en phase.

On utilise classiquement des stations de base dans des systèmes d'interrogation à distance tels que des portes d'accès que l'on peut ouvrir en approchant des transpondeurs tels que des cartes d'accès. Une station de base comprend essentiellement un dispositif oscillant de commande, un circuit de modulation en amplitude et des moyens de commande agissant sur une antenne connectée à la station de base. Classiquement, le dispositif oscillant de commande est un dispositif périphérique. Le dispositif oscillant de commande est généralement un cristal de quartz qui fournit un signal de commande ayant une fréquence porteuse déterminée, quand le cristal de quartz vibre à une fréquence généralement supérieure à la fréquence de résonance de l'antenne (typiquement 1 MHz). Le signal de commande est ensuite modulé par le circuit de modulation qui contient également couramment une chaîne de division pour amener la fréquence du signal de commande à la fréquence de résonance de l'antenne (typiquement 125 kHz). Puis ce signal est émis par l'antenne formée essentiellement par une bobine. Le signal modulé émis est susceptible d'être reçu par un transpondeur si ce dernier est approché de la station de base.

Pour l'essentiel, les transpondeurs sont dépourvus de batterie et sont destinés à échanger des informations avec un dispositif d'interrogation à distance tel qu'une station de base du type susmentionné. La tension d'alimentation est fournie aux transpondeurs à partir du signal de commande émis par la station de base. Ce signal est modulé par le transpondeur, et le signal ainsi modifié est destiné à la lecture du transpondeur par la station de base.

La demande de brevet britannique No 9517526.1 décrit une telle station de base utilisée dans un système antivol pour une automobile.

Un problème rencontré dans ces stations de base réside dans le fait que la fréquence porteuse Fo du signal de commande modulé doit être la plus proche possible de la fréquence de résonance de l'antenne, Fr1, et la fréquence de résonance du transpondeur, Fr2. Ceci a pour effet d'augmenter la sensibilité de lecture de la station de base.

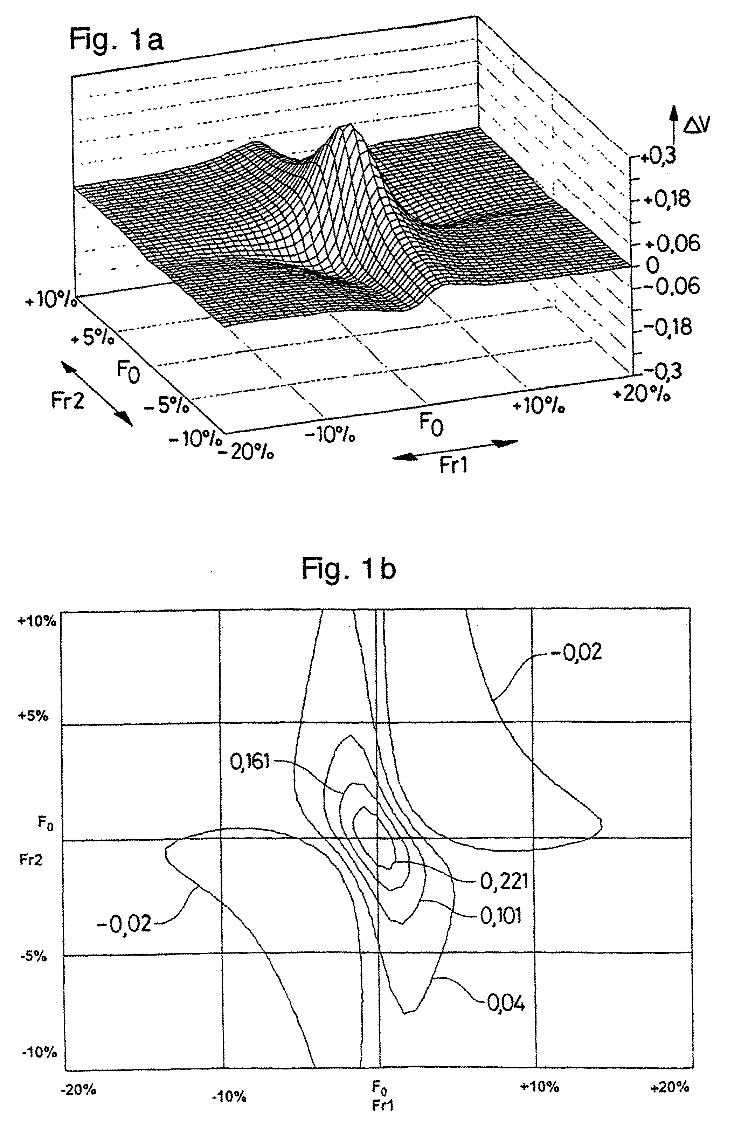

Les stations de base selon l'art antérieur n'apportent pas une solution satisfaisante à ce problème. En effet, la dispersion des valeurs de l'ensemble des composants du système induit une différence notable entre la fréquence de.résonance de l'antenne et la fréquence qui lui est fournie. Or, la sensibilité de lecture de la station de base est liée aux variations de tension aux bornes de l'antenne, elles-mêmes liées aux variations du signal reçu par l'antenne. A titre illustratif, la figure la représente les variations de tension ΔV aux bornes de l'antenne en fonction de la fréquence Fr1 et de la fréquence Fr2, la fréquence Fo étant égale à 125 kHz, et la figure 1b représente quelques courbes isovaleurs (c'est-à-dire à ΔV constante) associées à la figure 1a. La plage de fréquence dans laquelle la station de base fonctionne correctement est limitée à quelques pourcents autour de la fréquence Fo, comme cela est mieux représenté dans la figure 1b. Ainsi une différence entre la fréquence du signal transmis et la fréquence de résonance de l'antenne entraîne une perte de puissance lors de l'échange avec le transpondeur.

On notera aussi dans la figure 1b la présence de régions correspondant à des variations ΔV négatives, c'est-à-dire des régions dans lesquelles les informations provenant du transpondeur sont inversées. Les stations de base antérieures de ce type présentent donc un inconvénient supplémentaire. On comprend que la présence de ces régions d'inversion peut être particulièrement gênante quand ces stations de base sont utilisées, par exemple, dans un système d'ouverture de porte d'accès.

D'autres solutions existent dans l'art antérieur, en particulier des stations de base dans lesquelles les composants sont discrets, complexes et donc coûteux. Par exemple, la demande de brevet cité ci-dessus décrit une station de base d'un système d'interrogation à distance, utilisant un microprocesseur comme dispositif oscillant de commande.

Un objet de la présente invention est de prévoir une station de base d'un système d'interrogation à distance, comprenant un dispositif oscillant de commande propre à fournir un signal dont la fréquence porteuse du signal de commande est adaptée à la fréquence de résonance de l'antenne, la station étant peu coûteuse et facile à réaliser.

Un autre objet de la présente invention est de prévoir une station de base comprenant un dispositif oscillant de commande dans une même structure intégrée.

Ces objets ainsi que d'autres sont atteints par la station de base d'un système d'interrogation à distance selon la revendication 1.

Un avantage de la présente invention est de fournir une station de base de haute sensibilité, c'est-à-dire une station de base utilisant un réglage continu et optimal de la fréquence porteuse du signal de commande en fonction de l'antenne.

Un autre avantage de la présente invention est de fournir une station de base susceptible de fonctionner sur une plage de fréquence comprise entre 100 et 150 kHz.

Un autre avantage de la présente invention est de fournir une station de base constituée de composants intégrés dont la structure est relativement simple.

Les objets, caractéristiques et avantages de la présente invention apparaîtront plus clairement à la lecture de la description détaillée d'un mode de réalisation préféré de l'invention, donné à titre d'exemple uniquement, en relation avec les figures jointes, parmi lesquelles :
- la figure 1a représente les variations de tension aux bornes de l'antenne en fonction de la fréquence de résonance de l'antenne et de la fréquence de résonance du transpondeur, pour un système d'interrogation à distance comprenant une station de base antérieure du type décrit ci-dessus;
- la figure 1b représente quelques courbes isovaleurs associées à la figure 1a;
- la figure 2 représente un schéma de principe d'un système d'interrogation à distance comprenant une station de base selon la présente invention;
- la figure 3 représente un schéma sous forme de blocs de la station de base de la figure 2;
- la figure 4a représente les variations de tension aux bornes de l'antenne en fonction de la fréquence de résonance de l'antenne et de la fréquence de résonance du transpondeur, pour un système d'interrogation à distance comprenant une station de base selon la présente invention, et
- la figure 4b représente quelques courbes isovaleurs associées à la figure 4a.

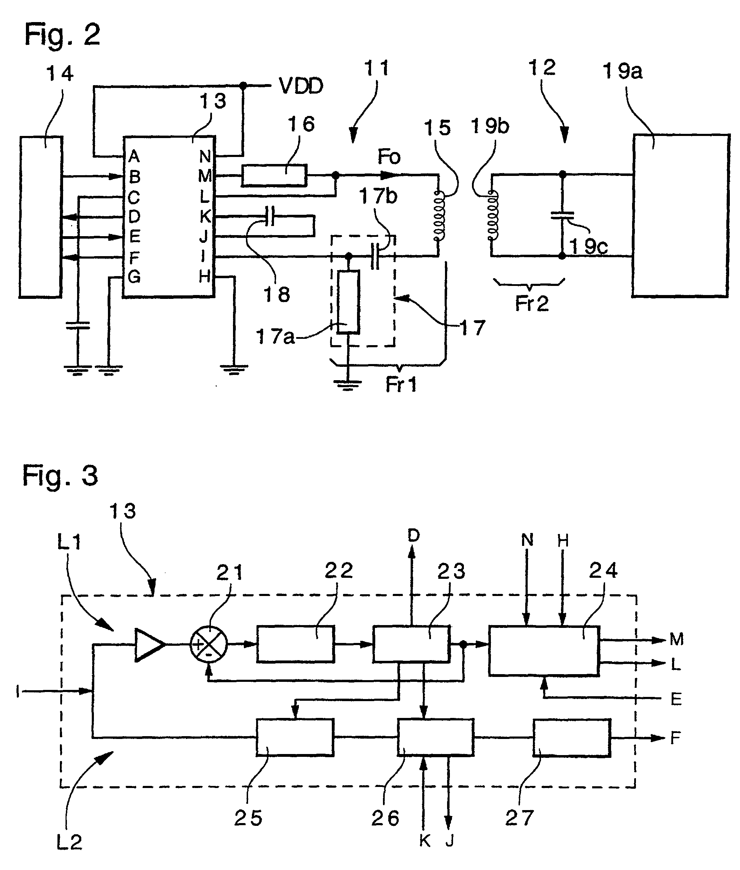

La figure 2 représente une structure complète d'un système d'interrogation à distance comprenant un émetteur-récepteur 11 et un transpondeur 12.

L'émetteur-récepteur 11 est essentiellement constitué d'une station de base 13, d'un microprocesseur 14 et d'une antenne 15. La station de base 13 comprend quatorze broches désignées par les références A à M. Les broches A et N sont connectées à une source d'alimentation de tension VDD, les broches G et H sont directement mises à la masse et la broche C est mise à la masse par un condensateur de découplage. Le microprocesseur 14 est connecté aux broches B, D, E et F. L'antenne 15 correspond essentiellement à une bobine ayant deux bornes, une première borne étant connectée à la broche L et à la broche M par une résistance 16, et une seconde borne étant connectée à la broche I par un circuit de détection 17. Le circuit de détection 17 peut être un circuit résonant classique correspondant à une résistance 17a et à un condensateur 17b dans la figure 2. Un condensateur de filtrage 18 est connecté aux bornes K et J.

Le transpondeur 12 est essentiellement constitué d'une bobine 19b et d'un condensateur 19c connecté en parallèle sur la bobine 19b, propre à échanger de l'énergie avec l'antenne 15 et de circuits logiques 19a tels que des mémoires, pour modifier le signal de commande, comme cela a été précédemment décrit.

La figure 3 représente le schéma sous forme de blocs de la station de base 13. La broche I est connectée à deux lignes L1 et L2.

La ligne L1 connecte en série à la broche I un comparateur de phase 21, un filtre 22, un oscillateur de commande en tension 23 et des moyens de commande d'antenne 24, et est pourvue d'une boucle de rétroaction partant du point de raccordement entre l'oscillateur 23 et les moyens de commande 24 vers le comparateur 21. L'oscillateur 23 a une autre sortie connectée à la broche D et fournissant un signal d'horloge pour le microprocesseur 14. En outre, les moyens de commande 24 comprennent des entrées connectées aux broches E, N et H et des sorties connectées aux broches M et L.

La ligne L2 connecte en série à la broche I un échantillonneur 25, un filtre passe-bande 26 et un circuit de décision 27 dont la sortie est connectée à la broche F. L'échantillonneur 25 comprend aussi une entrée connectée à l'oscillateur 23. Le filtre passe-bande 26 comprend aussi deux entrées connectées à la broche K et à l'oscillateur 23, et une sortie connectée à la broche J.

La station de base 13 permet deux modes de fonctionnement : en émission ou en réception.

L'émission est réalisée par la ligne L1. Plus précisément, les moyens de commande 24 fournissent un courant à l'antenne 15 pour produire un champ électromagnétique. Le circuit de détection 17 fournit alors à la broche I une tension en phase avec le signal de commande fourni par l'oscillateur 23. Ainsi l'ensemble constitué des éléments 21, 22 et 23 permet de maintenir 1a fréquence Fo du signal de commande égale à la fréquence de résonance Fr1 de l'antenne 15.

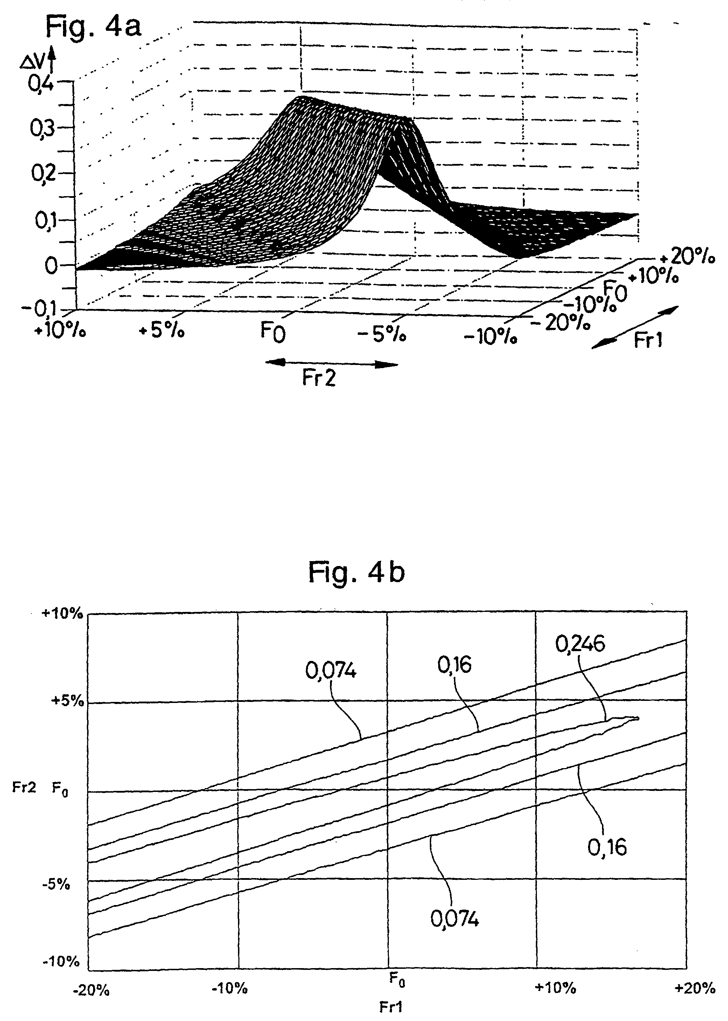

En fait, la fréquence de résonance Fr1 de l'antenne 15 est typiquement égale à 125 kHz. Toutefois, la fréquence de résonance réelle de l'antenne 15 peut être égale à une valeur sensiblement différente de 125 kHz, suite à des fluctuations de paramètres technologiques de fabrication. La figure 4a représente les variations de tension ΔV aux bornes de l'antenne 15 en fonction de la fréquence Fr1 et de la fréquence Fr2, la fréquence Fo étant égale à Fr1, et la figure 4b représente quelques courbes isovaleurs associées à la figure 4a, pour un système d'interrogation à distance comprenant une station de base selon la présente invention. Comme le représentent ces figures, le système d'interrogation à distance comprenant cette station de base fonctionne correctement, même si la fréquence de résonance réelle est comprise entre 100 et 150 kHz, à condition que la fréquence Fr2 reste à quelques pourcents autour de la fréquence Fo. En effet, la variation ΔV reste maximum dans cette plage de fréquence, comme le représente la figure 4a, contrairement aux stations de base selon l'art antérieur en relation avec les figures 1a et 1b. En outre, le degré de liberté sur la fréquence de résonance réelle de l'antenne 15 est suffisant pour assurer le bon fonctionnement du système d'interrogation à distance comprenant la station de base selon la présente invention.

On notera aussi dans la figure 4b que la variation ΔV est toujours positive, quel que soit le couple de fréquence Fr1, Fr2. Ainsi le système d'interrogation à distance comprenant une station de base selon la présente invention ne présente pas de problèmes de fonctionnement du type décrit pour des systèmes antérieurs.

Lors de la réception, c'est-à-dire quand le transpondeur 12 rentre dans le champ magnétique de l'antenne 15, le signal modifié est lu par l'antenne 15 puis détecté par le circuit de détection 17. Ce signal modifié suite à une modulation en amplitude par le transpondeur 12 doit être démodulé, de sorte que le circuit de décision 27 transforme le signal analogique reçu à l'antenne 15 en signal numérique compatible avec le microprocesseur 14 (voir la figure 3).

Puisque la station de base selon la présente invention a une sensibilité améliorée comme cela a été expliqué ci-dessus, le circuit de démodulation peut être avantageusement simplifié par rapport à des stations de base selon l'art antérieur.

Dans le mode de réalisation préféré de la présente invention, la démodulation est assurée de la manière suivante. Le signal est d'abord échantillonné par l'échantillonneur 25 en synchronisation avec le signal d'horloge provenant de l'oscillateur 23. Le signal échantillonné est alors filtré par le condensateur 18 et par le filtre passe-bande 26. Ainsi le signal correspondant au signal modulé en amplitude reçu par l'antenne 15 est converti par le comparateur 27 de sorte qu'il est compatible avec le microprocesseur 14 auquel il est fourni par la broche F.

A ce stade, on comprend que la fonction du microprocesseur 14 est de valider ou d'invalider l'interrogation à distance induite par l'approche du transpondeur 12, et qu'en aucun cas il n'agit sur le dispositif oscillant 23, contrairement aux systèmes antérieurs déjà mentionnés qui nécessitent alors un microprocesseur plus complexe et donc plus coûteux.

## Revendications

1. Station de base (13) pour un système d'interrogation à distance comprenant un dispositif oscillant (23) qui fournit un signal de commande dont la fréquence est réglable par des moyens de réglage (21, 22), des moyens de commande (24) d'une antenne connectée à la station de base (13) pour émettre des informations, des moyens de décodage (25, 26, 27) pour décoder les informations reçues à l'antenne, **caractérisée en ce que** : le dispositif oscillant (23) est un oscillateur commandé en tension et asservi en phase par les moyens de réglage (21, 22), de sorte que la fréquence du signal de commande est déterminée par la station de base (13) et est adaptée à l'antenne.

2. Station de base (13) selon la revendication 1, dans laquelle le dispositif oscillant (23), les moyens de réglage (21, 22), les moyens de commande (24) et les moyens de décodage (25, 26, 27) sont des éléments intégrés dans une même puce.

3. Station de base (13) selon la revendication 1, dans laquelle les moyens de réglage (21, 22) comprenant un comparateur de phase (21) et un filtre (22) constituent un asservissement en phase pour le dispositif oscillant (23).

4. Station de base (13) selon la revendication 1, dans laquelle les moyens de décodage (25, 26, 27) comprennent un échantillonneur (25), un filtre passe-bande (26) et un comparateur (27).

## Claims

1. Base station (13) for a contactless interrogation system comprising an oscillating device (23) supplying a control signal having a frequency which is adjustable via adjusting means (21, 22), means (24) for controlling an antenna connected to the base station (13) for transmitting information, means (25, 26, 27) for decoding the information picked up by the antenna, **characterised in that** :
the oscillating device (23) is a voltage controlled oscillator which is phase locked by said adjusting means (21, 22), so that the control signal frequency is determined by the base station (13) and is adapted to the antenna.

2. Base station according to claim 1, **characterised in that** the oscillating device (23), the adjusting means (21, 22), the control means (24) and the decoding means (25, 26, 27) are elements integrated on a same chip.

3. Base station according to claim 1, wherein the adjusting means (21, 22) comprising a phase lock comparator (21) and a filter (22) constitute a phase lock mounting for the oscillating device (23).

4. Base station according to claim 1, wherein the decoding means (25, 26, 27) comprise a sampler (25), a pass-band filter (26) and a comparator (27).

## Patentansprüche

1. Basisstation (13) für ein Femabfragesystem, die eine oszillierende Vorrichtung (23), die ein Steuersignal liefert, dessen Frequenz durch Einstellmittel (21, 22) einstellbar ist, Steuermittel (24) für eine Antenne, die mit der Basisstation (13) verbunden ist, um Informationen auszusenden, und Decodierungsmittel (25, 26, 27) die bei der Antenne empfangene Informationen decodieren, umfaßt, **dadurch gekennzeichnet, daß**:
die oszillierende Vorrichtung (23) ein durch die Einstellmittel (21, 22) spannungsgesteuerter und phasengeregelter Oszillator ist, derart, daß die Frequenz des Steuersignals durch die Basisstation (13) bestimmt wird und an die Antenne angepaßt ist.

2. Basisstation (13) nach Anspruch 1, in der die oszillierende Vorrichtung (23), die Einstellmittel (21, 22), die Steuermittel (24) und die Decodierungsmittel (25, 26, 27) Elemente sind, die auf demselben Chip integriert sind.

3. Basisstation (13) nach Anspruch 1, in der die Einstellmittel (21, 22) einen Phasenkomparator (21) und ein Filter (22) umfassen, die für die oszillierende Vorrichtung (23) eine Phasenregelung bilden.

4. Basisstation (13) nach Anspruch 1, in der die Decodierungsmittel (25, 26, 27) eine Abtasteinrichtung (25), ein Bandpaßfilter (26) und einen Komparator (27) umfassen.
